# EUROPEAN PATENT APPLICATION

(11) **EP 1 521 406 A1**
(43) Date of publication of application: **06.04.2005**
(21) Application number: 03292402.9
(22) Date of filing: 30.09.2003
(51) Int. Cl.: H04L 12/56

(54) **Resource scheduler for allocating transmission capacity in an access network and method for operating said resource scheduler**

(71) Applicant: ALCATEL, 75008 Paris (FR)
(72) Inventor: Wahl, Stefan, 71701 Schwieberdingen (DE)
(74) Representative: Wörz, Volker

(57) **Abstract**

The invention relates to a resource scheduler (110) for allocating transmission capacity in an access network and a method for its operation. Such resource schedulers (110) are in principle known in the art. However, for exploiting the enhanced transmission capacity as provided by MIMO systems in combination with access networks the resource scheduler (110) is not only embodied to configure the resources of the access network by configuring unused resources of a channel but also to configure the unused resources of the transmission paths (320-1...-M) as provided by the MIMO system.

## Description

The invention relates to a method and a resource scheduler for allocating transmission capacity in an access network having a base station, at least one subscriber and at least one channel therebetween.

Such networks and such resource schedulers are in principle known in the art. In an access network typically a subscriber does not access an available complete channel capacity at a time and consequently there typically remain unused resources of the network which might be provided to other subscribers. Therefore, resource schedulers are provided for fulfilling requests of transmission capacity of the subscribers as far as possible under consideration of the available network resources. More specifically, a resource scheduler informs a client upon request at what time which channel of the network can be used by him for how long and by using which modulating and coding method.

A specific one of said resource schedulers is disclosed in the European patent application EP 1 317 102. In said patent application the resource scheduler is referred to as quality of service controller. According to that disclosure the resource scheduler serves for allocating transmission allowances to the subscribers in case of an uplink as well as of a downlink transfer.

The known resource schedulers are typically embodied to handle a great variety of resource parameters, such as bandwidths, the used modulating and coding methods and/or the number of subchannels to enable a parallel transmission of data. However, for some modern applications the available transmission capacity which can be realized or provided by the known resource schedulers is not enough.

A known technology for providing additional transmission capacity is the Multiple-Input Multiple-Output MIMO-technology. According to that technology the base station as well as each subscriber in a network has a plurality of antennas enabling a spatial multiplexing and a spatial diversity. Spatial multiplexing means that there are multiple transmission paths provided between the base station and each subscriber. In that way a maximal data rate and system capacity is provided. Spatial diversity means that at least some of these multiple transmission paths between the base station and the subscribers might be used for transmitting the same information. This serves for increasing the link quality. Further, MIMO enables the exploitation of an array gain and for reducing code-channel interference.

Starting from that prior art it is the object of the present invention to improve a known method and computer program and a resource scheduler for allocating transmission capacity in an access network in such a way that a bigger transmission capacity becomes available in an access network.

This object is solved by the method claimed by claim 1. More specifically, this object is solved by a method for operating a resource scheduler for allocating transmission capacity in an access network having a base station, at least one subscriber and at least one channel therebetween, comprising the steps of:
- receiving a request of a required transmission capacity from the subscriber;
- comparing the request with the available unused resources of the channel;
- configuring the resources of the access network by configuring - as far as possible - the resources of the channel under consideration of the result of said comparison; and
- allocating the requested transmission capacity to the subscriber in the form of the generated resource configuration of the access network
characterized in that there are multiple transmission paths provided between the base station and the subscriber; each of said transmission paths is embodied to accommodate at least a part of the resource-configured channel and the configuration of the access network further includes a configuration of the multiple transmission paths in the form of a selection and a determination of at least one of the multiple transmission paths which is allocated to the subscriber upon its request.

A channel between a base station and a subscriber in an access network according to the invention is not necessarily restricted to only one channel; to the contrary it may comprise N subchannels. Over each of said subchannels a data transmission is possible by using the same or identical modulating or coding methods. By defining a specific configuration of these available resources of the access network and in particular of the channel already a plurality of parallel data transmission is provided. However, according to the present invention, the capacity is still enhanced by providing an additional degree of freedom in the form of the number of transmission paths available between a subscriber and the base station when there is a Multiple-Input Multiple-Output MIMO-system installed therebetween. When considering that additional degree of freedom, the maximal number of possible data transfers is still increased by a factor M representing the number of available transmission paths provided by the MIMO system.

Advantageously, the transmission paths allocated to a subscriber are selected and determined under consideration of the transmission quality of each of the multiple transmission paths. Further advantageous embodiments of the claimed method are subject-matter of the dependent claims.

The above-identified object of the invention is further solved by a computer program and/or a resource scheduler for carrying out the claimed method. The advantages of these solutions correspond substantially to the advantages mentioned above by referring to the claimed method.

Moreover, it is advantageous that only one resource scheduler according to the invention is necessary to carry out the allocation for uplink and/or downlink transfers.

### Figures

There are three figures accompanying the description, wherein
- Figure 1: shows the hardware construction of a MIMO system comprising a base station and a subscriber;
- Figure 2: illustrates the construction of one channel according to the invention; and
- Figure 3: shows a flowchart illustrating the method of the present invention.

In the following the invention is described in more detail by referring to the above-mentioned figures.

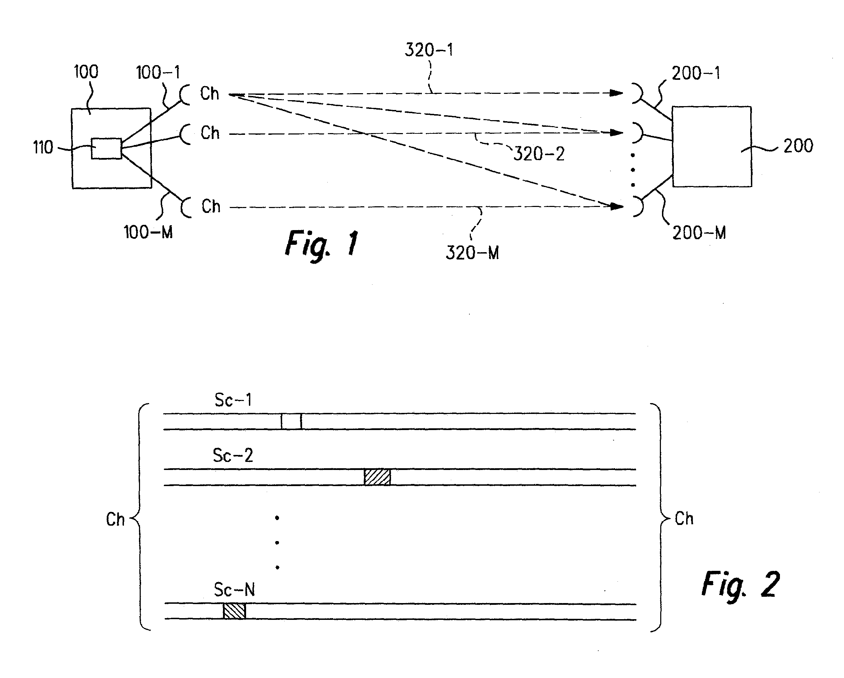

Figure 1 illustrates the hardware configuration of at least a part of an access network. The access network includes a base station 100 and at least one subscriber 200. The base station 100 comprises a resource scheduler 110 for allocating available transmission capacity in the access network to the subscribers 200 upon request.

In common access networks there is a channel Ch provided between the base station 100 and each of the subscribers 200.

Figure 2 illustrates such a channel Ch in more detail. The channel Ch typically comprises a plurality of N subchannels Sc-1...-N. In such a channel configuration the resource scheduler 110 is responsible for fulfilling the subscribers requests for transmission capacity under consideration of the available resources of the access network and in particular of the channel Ch. More specifically, the resource scheduler 110 allocates transmission capacity to a subscriber by informing the subscriber that the subscriber is allowed to transfer data on a particular one of said subchannels Sc-1...-N in an individually allocated time slot with an individually adapted modulating and/or coding method.

However, according to the present invention there is made the assumption that there is a Multiple-Input Multiple-Output MIMO system provided between the base station and preferably each of the subscribers 200. Said MIMO system provides a plurality of M transmission paths 320-1...320-M between the base station 100 and each of the subscribers 200. In Figure 1 said MIMO system is indicated by a plurality of MIMO antennas 100-1...100-M and 200-1...-M which are provided at the base station 100 and the subscriber 200. Each of the transmission paths 320-1...-M is embodied to accommodate at least a part of the resource-configured channel Ch. Contrary to the embodiment shown in Figure 1 the number of MIMO antennas might be different on the base station-side and on the subscriber-side.

In order to effectively exploit the enhanced transmission capacity provided by the MIMO system the resource scheduler 110 is embodied to further configure the access network by configuring the multiple transmission paths by selecting and determining at least one of the multiple transmission paths 320-1...-M to be allocated to a subscriber 200 upon request. Explained in more detail in the case of a downlink, i. e. when information is transferred from the base station to at least one of said subscribers 200 the resource scheduler 110 is embodied to decide which of the signals or datas to be transmitted have to use which MIMO antennas 100-1...M of the base station. In the case of an uplink transfer, i. e. when data is sent from at least one of the subscribers 200 to the base station 100 the resource scheduler is embodied to decide which of the MIMO antennas 100-1...-M of the base station 100 has to receive the data transferred from a dedicated subscriber 200.

The resource scheduler 110 is embodied to take the decision about the transmission path 320-1...-M to be allocated to the subscriber under consideration of the transmission quality of each of the available transmission paths of the MIMO system. Some of said transmission paths 320-1...320-M might more or less be interfered and thus the resource scheduler 110 is embodied to select only the transmission paths which are not or only minimally interfered.

A request of a subscriber typically does not only include information about the required transmission capacity but also about a desired link quality, i. e. bit error rate. In these cases the scheduler is embodied to control or to adjust the MIMO system such that the desired transmission capacity as well as the desired link quality is provided by the MIMO system. The MIMO system offers both, transmission capacity and link quality in a complementary manner. The scheduler knows about that fact and is thus able to individually allocate more or less transmission capacity and link quality to preferably each service offered by the subscriber in response to the request.

Advantageously, there is only one resource scheduler 110 necessary for allocating the transmission capacity as described above for uplink as well as for downlink transmissions.

A data packet might be divided into several parts which might be transmitted in the access network via different individually allocated transmission paths. In that case the resource scheduler 110 has to make sure that the separate parts are transmitted in compliance with a protocol used by the receiver. Expressed in other words, the resource scheduler 110 has to make sure that the data sequence is kept together in that case.

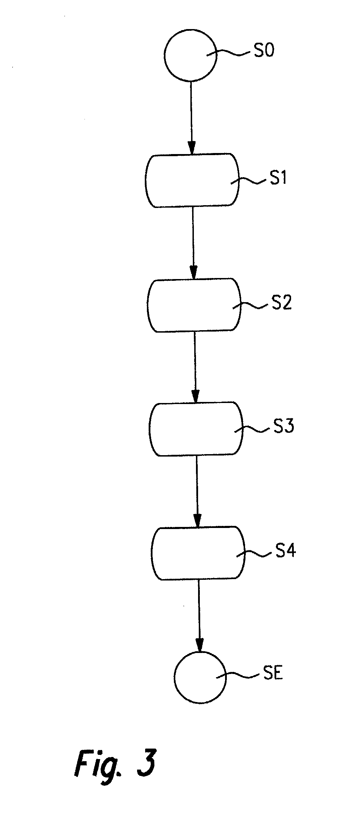

Figure 3 illustrates the method for allocating transmission capacity in an access network according to the invention.

After a start step S0 the resource scheduler 110 waits in method step 1 for receiving a request of a required transmission capacity from at least one of the subscribers 200 of the access network. Upon receipt of such a request the resource scheduler 110 compares in method step S2 the requested transmission capacity with the available and unused resources of the channel Ch. After that the resource scheduler 110 configures in method step S3 the resources of the access network by configuring the unused resources of the channel and - according to the invention - additionally the unused resources of the MIMO system, i. e. of the available multiple transmission paths under consideration of the result of the comparison done in method step S2. Finally, in method step S4 the requested transmission capacity is allocated to the subscriber in the form of the generated resource configuration of the access network. After that the allocating method according to the invention has finished in method step SE and subsequently a transmission of data starts in compliance with the generated resource configuration. During said transmission of data the resource scheduler waits in method step 1 to receive a further request.

Said method is preferably realized by a computer program having a code for the resource scheduler 110 running on a microprocessor. Alternatively, the resource scheduler might be at least partially embodied as a hardware processing engine.

## Claims

1. Method for operating a resource scheduler for allocating transmission capacity in an access network having a base station (100), at least one subscriber (200) and at least one channel (Ch) therebetween, comprising the steps of:
- receiving a request of a required transmission capacity from the subscriber (200);
- comparing the request with the available unused resources of the channel (Ch);
- configuring the resources of the access network by configuring - as far as possible - the resources of the channel (Ch) under consideration of the result of said comparison; and
- allocating the requested transmission capacity to the subscriber (200) in the form of the generated resource-configuration of the access network;
**characterized in that**
there are multiple (M) transmission paths (320-1...-M) provided between the base station (100) and the subscriber (200);
each of said transmission paths (320-1...-M) is embodied to accommodate at least a part of the resource-configured channel (Ch); and
the configuration of the access network further includes a configuration of the multiple transmission paths (320-1...-M) in the form of a selection and
determination of at least one of the multiple transmission paths which is allocated to the subscriber (200) upon its request.

2. Method according to claim 1, **characterized in that** the selection and determination of the transmission paths allocated to the subscriber is done under consideration of the transmission quality of each of the multiple transmission paths.

3. Method according to one of the preceding claims, **characterized in that** the resource-configuration of the channel (Ch) includes a determination of a particular subchannel (Sc-1...-N), the start time and the duration of a particular time slot, the modulating method and/or the coding method to be used by the subscriber (200) for transferring data via the channel (Ch).

4. Method according to one of the preceding claims, **characterized in that** the allocation of the transmission capacity is done for uplink and/ or downlink transmissions.

5. Method according to one of the preceding claims, **characterized in that** the bi-directional communication between the base station and the subscribers is done in the form of the Medium Access Control MAC protocol.

6. Method according to one of the preceding claims, **characterized in that** two or more of said transmission paths are simultaneously preferably temporarily allocated to the subscriber (200).

7. Method according to claim 6, **characterized in that** the method ensures that a data sequence is kept in the case that several transmission paths are concurrently used.

8. Computer program having a code for a resource scheduler, **characterized in that** the code is embodied to carry out the method according to claims 1 to 7.

9. Resource scheduler (110) for allocating transmission capacity in an access network having a base station, at least one subscriber and at least one channel therebetween, the resource scheduler being embodied to:
- receive a request of a required transmission capacity from the subscriber (200);
- compare the request with the available unused resources of the channel (Ch);
- configure the resources of the access network by configuring - as far as possible - the unused resources of the channel under consideration of the result of said comparison; and
- allocate the requested transmission capacity to the subscriber (200) in the form of the generated resource-configuration of the access network;
**characterized in that**
in the case that there is a Multiple-Input Multiple-Output MIMO system (100-1...-M; 200-1...-M, 320-1...-M) provided between the base station (100) and the subscriber (200) wherein each of the transmission paths provided by said MIMO system is embodied to accommodate at least a part of the resource-configured channel (Ch) the resource scheduler (110) is embodied to further configure the access network by configuring the multiple transmission paths by selecting and
determining at least one of the multiple transmission paths which is allocated to the subscriber (200) upon its request.

10. Resource scheduler (110) according to claim 9, **characterized in that** the resource scheduler (200) is embodied to carry out the allocation for uplink and/or downlink transfers.

11. Resource scheduler (110) according to claim 10, **characterized in that** in the case of a downlink transfer the scheduler (110) is embodied to decide which of the signals to be transmitted in parallel via the MIMO system have to use which MIMO antenna (100-1...-M) of the base station (100).

12. Resource scheduler (110) according to claim 10, **characterized in that** in the case of an uplink transfer the scheduler (110) is embodied to decide which MIMO antenna of the base station (100) has to receive the data transferred from a dedicated subscriber (200).
